# EUROPEAN PATENT SPECIFICATION

(11) **EP 2 382 276 B1**
(45) Date of publication and mention of the grant of the patent: **17.01.2018**
(21) Application number: 09795522.3
(22) Date of filing: 20.11.2009
(51) Int. Cl.: C09D 183/04, C09D 5/16, C09D 7/12, C08K 3/22, C08K 3/30, C08K 5/23, C08L 23/22

(54) **POLYMERIC ANTIFOULING COMPOSITION AND ARTICLES MADE THEREOF**
POLYMERE ANTIFÄULNISZUSAMMENSETZUNG UND DARAUS HERGESTELLTE GEGENSTÄNDE
COMPOSITION ANTISALISSURE POLYMÈRE ET ARTICLES FABRIQUÉS À PARTIR DE CELLE-CI

(30) Priority: 29.01.2009 GB 0901458
(43) Date of publication of application: 02.11.2011
(73) Proprietor: The Champion Partnership, Aberdeen, Aberdeenshire AB12 3QH (GB)
(72) Inventor: MILNE, John, Alastair, Aberdeen Aberdeenshire AB12 3QH (GB)
(74) Representative: Lincoln, Matthew
(86) International application number: PCT/GB2009/051580
(87) International publication number: WO 2010/086579

(56) References cited:
- EP-A- 0 063 388
- EP-A- 0 171 110
- EP-A- 1 990 366
- WO-A-2005/109960
- DE-A1-102005 013 259
- GB-A- 577 332
- GB-A- 2 434 022
- JP-A- 3 045 664
- RO-A2- 68 177
- US-A1- 2004 109 853
- H. KITTEL: "Lehrbuch der Lacke und Beschichtungen, Band II, Pigmente, Füllstoffe, Farbstoffe" 1974, VERLAG W.A. COLOMB IN DER H. HEENEMANN GMBH , BERILN - OBERSCHWANDORF , XP002569330 page 93, paragraphs 1,2 page 94, paragraphs 1,2
- J. FALBE, M. REGITZ: "Römpp Lexikon Chemie, 10th edition" 1998, GEORG THIEME VERLAG , STUTTGART, NEW YORK , XP002569331 page 2896
- U. ZORLL: "Römpp Lexikon Lacke und Druckfarben" 1998, GEORG THIEME VERLAG , STUTTGART, NEW YORK , XP002569332 pages 180-181

## Description

The present invention relates to polymeric antifouling compositions as well as to a method for its manufacture, and to articles or structures comprising the polymeric antifouling compositions according to the present invention.

Various different types of articles incorporating visual characters are known, for example signs. The visual characters are typically numerals, letters, words, phrases, sentences or other indicia such as regular or irregular shapes. One particular type of sign is that utilised in aquatic environments such as subsea locations, for marking or providing information about an object located below the surface or on the seabed. Such signs have a particular utility in the oil and gas exploration and production industry. Aquatic organisms such as grasses, algae, barnacles, tube worms, sepula, oysters, ascidia, bryozoa and the like are a particular problem, and can cause fouling of such subsea signs so that the sign becomes illegible.

In an effort to overcome these problems, polymeric antifouling silicone based compositions have been developed which resist such aquatic growth, as disclosed for example in British Patent No. 1,307,001, in the name of Kroyer.

To further improve the antifouling properties of such coatings it is known to incorporate into the vulcanized silicon rubbers, a fluid organic compound which has a tendency to exude out from the surface of the sign when in use, thereby further reducing aquatic growth and fouling of the sign. Examples of suitable materials include silicon oils (see for example the teachings of British Patent No. 1,470,465 in the name of the International Paint Company Limited), low molecular weight polyolefins, polyesters, polyisocynates, polyurethanes, polyepoxides, lubricating oils and plasticizers, as described in British Patent No. 1,581,727, in the name Shell Internationale Research Maatschappij B.V.

Silicone rubbers, and in particular room temperature vulcanizable silicone rubbers, are known to have excellent water-repelling properties which makes them ideally suited for use in subsea locations. They are however rather porous and as such water may pass through their structure. European Patent Publication No. 0 171 110, also in the name in the name Shell Internationale Research Maatschappij B.V., addresses this issue by attaching a water-impermeable layer to a high-built layer (namely, a layer comprising the vulcanized silicone rubber and a fluid organic compound) by means of an acrylate-type bonding film.

US Patent Publication No. 2007/0023959 in the name Movevirgo Limited describes a sign formed from the above-described polymeric antifouling compositions and comprising a backing layer of a Velcro ® -type hook and/or loop fastener material.

In order to improve the visibility of signs made from the above-described vulcanized silicone rubber it is known to incorporate markers comprising colouring pigments or dyes and/or fluorescent pigments or dyes within these compositions, see for example European Patent Publication No. EP 0 063 388 in the name Shell Internationale Research Maatschappij B.V. Traditionally this is achieved by mixing the selected markers with a suitable catalyst that is to be employed in the production process of the vulcanized silicone rubber.

With regards to the choice of pigments used in subsea locations certain practical criteria exist. In the first instance white colouring is not acceptable for such locations since the cameras on board remotely operated vehicles (ROVs) have a tendency to malfunction when light from such surfaces is reflected back into the camera.

With regards to the use of fluorescent markers, it is preferable for the emitted light to exhibit the same hue as light reflected by a dye used to colour the sign, because the reflected colour is thus reinforced with the emitter colour producing hues which appear extraordinarily bright to the eye. It is also advantageous if the pigments fluoresce under the influence of exciting light in the visible part of the spectrum (in other words, show daylight fluorescence) because in such cases irradiation with electric torch light, as used when working under water (e.g. by divers), the marked areas of the surface of the marine structures are clearly visible and identifiable.

The nature of the vulcanized silicone rubber used to manufacture signs is known to create difficulties in bonding pre-manufactured signs to subsea objects. Within UK Patent Publication No. 2,434,022, in the name Champion Environmental Technologies, the present inventors describe a method of mounting such vulcanized silicone rubber based signs. The method comprises the steps of applying an adhesive which is compatible with the antifouling material of the sign to at least one of a surface of the sign and a surface of the object e.g. a pipe section. Thereafter, the sign is located on the pipe section such that the adhesive forms a bond between the antifouling material of the sign and the pipe section, thereby mounting the sign on the pipe section.

During their work with these underwater signs the inventors have frequently discovered that the markers within the signs fade towards a white colour prior to the subsea deployment of the signs. This resulted in either the rejection of the sign prior to deployment or an increase in the above mentioned interference effect of the signs with cameras mounted on ROVs. The inventors believe that the fading of the markers results from the fact that, following their production, the signs often experience a long storage phase above sea level before deployment at their final destination. During this storage phase the markers within the signs are thus susceptible to degradation from natural light.

One solution to this problem, previously proposed by the inventors in UK Patent Publication No. 2,434,022, is to provide the sign with a cover which protects the sign from ultraviolet light. Such covers are however required to be removed prior to deployment of the signs so as to enable the anti-fouling properties of any exuding fluid organic compounds. In practice, this step can easily be forgotten which can have obvious safety implications since the signs are then susceptible to fouling and thus can quickly become obscured. In addition, it is extremely inconvenient, and costly, to arrange for the in situ removal of these covers.

It is therefore an object of an aspect of the present invention to obviate or at least mitigate the foregoing disadvantages of signs made from the prior art polymeric antifouling compositions.

For the purposes of the following discussion, a lightfast marker is defined as a colouring pigment or dye whose chemical composition is such that that it does not break down, and thus does not fade in colour under external influences such as natural light, acids, alkalis, etc. for the useful life of the composition in which they are incorporated

### Summary of Invention

According to a first aspect of the present invention there is provided a subsea sign comprising at least one visual character and a layer of polymeric antifouling composition, the polymeric antifouling composition comprising vulcanized silicone rubber; wherein the vulcanized silicone rubber is formed from vulcanization of a high viscosity silicone base comprising one or more lightfast markers wherein the lightfast marker comprises a marker selected from the group consisting of zinc chromate (ZnCrO4) known as zinc yellow; nickel antimony titanium yellow (NiO.Sb2O5.20TiO2), known as titanium yellow; cadmium sulphide (CdS), known as cadmium yellow; lead(II) chromate (PbCrO4), known as chrome yellow; hydrated iron oxide Fe2O3 • H2O, known as yellow ochre; cobalt(II) potassium nitrite, known as cobalt yellow; bismuth vanadate; aryl-azo compounds; mono-azo compounds; and di-azo compounds.
- The incorporation of lightfast markers results in the polymeric antifouling composition being chemically more stable to external influences when compared with those compositions known in the art, and so the compositions do not fade in colour over time.

Most preferably the lightfast marker comprises a bismuth vanadate compound.

The polymeric antifouling composition may further comprise a fluid organic compound that acts as an exuding liquid to the layer.

Preferably the polymeric antifouling composition further comprises a substantially water impermeable layer attached to the layer by an acrylate-type bonding film.

Optionally the polymeric antifouling composition comprises a backing sheet having an irregular surface.

There may be provided an article at least partly formed of a polymeric antifouling composition in accordance with the first aspect of the present invention. The article may comprise at least one visual character. Such an article provides for signs that are particularly suited for use in subsea location since their working lifetimes are significantly increased relative to those known in the art.

According to a second aspect of the present invention there is provided a method of producing a subsea sign, the method comprising forming the polymeric antifouling composition by blending at least one lightfast marker into the high viscosity silicone rubber base and forming a layer of the sign by vulcanizing the polymeric antifouling composition wherein the lightfast marker comprises a marker selected from the group consisting of zinc chromate (ZnCrO₄) known as zinc yellow; nickel antimony titanium yellow (NiO.Sb₂O₅.20TiO₂), known as titanium yellow; cadmium sulphide (CdS), known as cadmium yellow; lead(II) chromate (PbCrO₄), known as chrome yellow; hydrated iron oxide Fe₂O₃ • H₂O, known as yellow ochre; cobalt(II) potassium nitrite, known as cobalt yellow; bismuth vanadate; aryl-azo compounds; mono-azo compounds; and di-azo compounds.

The silicone rubber base may also be blended with a fluid organic compound.

Most preferably the lightfast marker is blended into the silicone rubber base with a high shear stirrer.

Preferably the high shear stirrer comprises a propeller. Preferably the propeller comprises saw tooth edges.

Most preferably the lightfast marker comprises a bismuth vanadate compound.

Optionally the mixture containing the silicone rubber base blended with the lightfast marker and if present the fluid organic compound may be vulcanized on a backing sheet.

Preferably the step of vulcanizing the mixture comprises heat curing of the mixture.

Alternatively, the step of vulcanizing the mixture comprises radiation curing of the silicone rubber base.

In a further alternative, the step of vulcanizing the mixture comprises a one-package ambient temperature vulcanizing process.

In a yet further alternative, the step of vulcanizing the mixture comprises a two-package ambient temperature vulcanizing process.

Optionally the method of production of the polymeric antifouling composition further comprises the attachment of a substantially water-impermeable layer to the vulcanized mixture.

There may be provided a method of production of a polymeric antifouling composition the method comprising:
- producing a silicone rubber base;
- blending a lightfast marker into the silicone rubber base; and
- vulcanizing the silicone rubber base.

Blending of the lightfast marker directly with the silicone rubber base provides a chemically stable base that can be subsequently vulcanized so as to produce a polymeric antifouling composition that does not fade due to external influences.

The method of production of the polymeric antifouling composition may further comprise blending a fluid organic compound into the silicone rubber base.

Most preferably the step of blending the lightfast marker into the silicone rubber base comprises mixing the silicone rubber base with a high shear stirrer.

Preferably the high shear stirrer comprises a propeller. Preferably the propeller comprises saw tooth edges.

Most preferably the lightfast marker comprises a bismuth vanadate compound.

Alternatively, the lightfast marker comprises a marker selected from a group comprising: zinc chromate (ZnCrO₄) known as zinc yellow; nickel antimony titanium yellow (NiO.Sb₂O₅.20TiO₂), known as titanium yellow; cadmium sulphide (CdS), known as cadmium yellow; lead(II) chromate (PbCrO₄), known as chrome yellow; hydrated iron oxide Fe₂O₃ • H₂O, known as yellow ochre; cobalt(II) potassium nitrite, known as cobalt yellow; aryl-azo compounds; mono-azo compounds; di-azo compounds and earth pigments (such as earth yellow).

Optionally, the silicone rubber base is vulcanized on a backing sheet.

Preferably the step of vulcanizing the silicone rubber base comprises heat curing the silicone rubber base with a catalyst.

Alternatively, the step of vulcanizing the silicone rubber base comprises radiation curing of the silicone rubber base.

In a further alternative, the step of vulcanizing the silicone rubber base comprises a one-package ambient temperature vulcanizing process of the silicone rubber base.

In a yet further alternative, the step of vulcanizing the silicone rubber base comprises a two-package ambient temperature vulcanizing process of the silicone rubber base.

Optionally the method of production of the polymeric antifouling composition further comprises the attachment of a substantially water-impermeable layer to the vulcanized silicone rubber.

There may be provided a polymeric antifouling composition comprising a layer containing a vulcanized silicone rubber, a fluid organic compound that acts as an exuding liquid to the layer, and one or more lightfast markers.

There may be provided a method of production of a polymeric antifouling composition the method comprising vulcanizing a mixture containing a silicone rubber base blended with a lightfast marker and a fluid organic compound.

There may be provided a method of production of a polymeric antifouling composition the method comprising:
- producing a silicone rubber base;
- blending a lightfast marker into the silicone rubber base;
- blending a fluid organic compound into the silicone rubber base; and
- vulcanizing the silicone rubber base.

There may be provided a polymeric antifouling composition comprising a layer containing an exuding or a non exuding vulcanized silicone rubber and one or more lightfast markers.

There may be provided a non exuding polymeric antifouling composition comprising a layer containing a vulcanized silicone rubber and one or more lightfast markers.

### Brief Description of Drawings

Aspects and advantages of the present invention will become apparent upon reading the following detailed description and upon reference to the following drawings in which:
Figure 1 presents a schematic side view of a polymeric antifouling composition in accordance with an embodiment of the present invention;
Figure 2 presents a schematic side view of an alternative embodiment of the polymeric antifouling composition;
Figure 3 presents a schematic side view of a further alternative embodiment of the polymeric antifouling composition;
Figure 4 presents a flow chart showing a method of production of the polymeric antifouling compositions of Figure 1; and
Figure 5 presents a flow chart showing a method of production of the polymeric antifouling compositions of Figure 3.

### Detailed Description

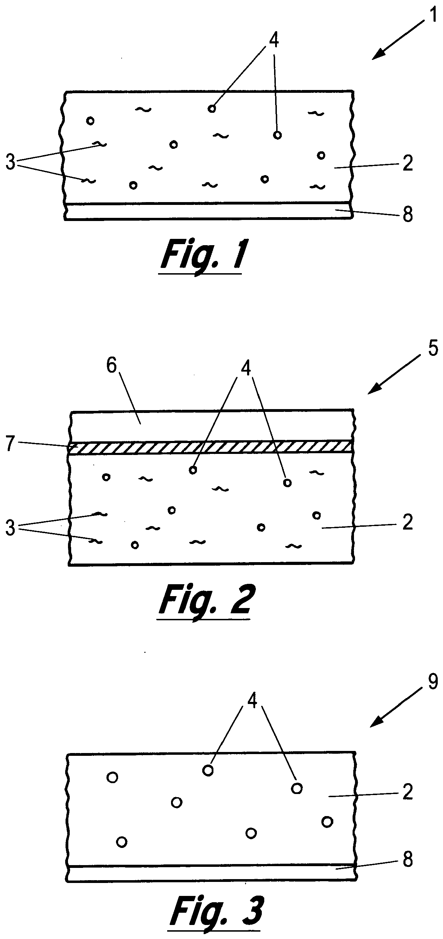

Figure 1 presents a schematic side view of a polymeric antifouling composition 1 in accordance with an embodiment of the present invention. The polymeric antifouling composition 1 can be seen to comprise a layer of vulcanized silicone rubber 2 which contains a fluid organic compound 3 that acts as an exuding liquid, and a plurality of lightfast markers 4.

In the presently described embodiment the vulcanized silicone rubber 2 comprises an organo-polysiloxane containing grafted polymeric segments based on styrene and butylacrylate while the fluid organic compound 3 comprises a polyisobutene. Most importantly however, is the composition of the lightfast markers 4 which in the presently described embodiment comprise a compound of bismuth vanadate.

It will be appreciated that the vulcanized silicone rubber 2 and, or, the fluid organic compound 3 may alternatively comprise any of the various alternative compositions known to those skilled in the art.

In alternative embodiments, the lightfast marker may comprise zinc chromate (ZnCrO₄) known as zinc yellow; nickel antimony titanium yellow (NiO.Sb₂O₅.20TiO₂), known as titanium yellow; cadmium sulphide (CdS), known as cadmium yellow; lead(II) chromate (PbCrO₄), known as chrome yellow; hydrated iron oxide Fe₂O₃ • H₂O, known as yellow ochre; cobalt(II) potassium nitrite, known as cobalt yellow; aryl-azo compounds; mono-azo compounds; di-azo compounds and earth pigments (such as earth yellow).

In a similar manner to that described in European Patent Publication No. 0 171 110 the polymeric antifouling composition may further comprise a substantially water-impermeable layer, as presented schematically in Figure 2. Here the polymeric antifouling composition, generally depicted by reference numeral 5, can be seen to comprise the polymeric antifouling composition of Figure 1 to which a polyvinylchloride water-impermeable layer 6 has been attached by means of an acrylate-type bonding film 7.

Signs made from the polymeric antifouling compositions 1 or 5 may incorporate a backing sheet 8 that comprises an irregular surface e.g. a backing sheet provided with hook and/or loop fasteners such as those sold under the Velcro ® trade mark. During manufacture, the vulcanized silicone rubber 2 forms a mechanical connection with the loops on the backing sheet 8 which allows for the completed sign to be attached via a suitable adhesive which readily bonds with the backing sheet 8.

Alternatively, signs made from the polymeric antifouling compositions 1 or 5 can be mounted by employing the method detailed by the inventors within UK Patent Publication No. 2,434,022.

A further alternative embodiment of the polymeric antifouling composition is presented in Figure 3 and depicted generally by the reference numeral 9. In this embodiment the polymeric antifouling composition 9 can be seen to comprise a layer of vulcanized silicone rubber 2 which contains a plurality of lightfast markers 4. Therefore the presently described embodiment differs from that presented in Figure 1 in that no additional fluid organic compound 3 that acts as an exuding liquid is incorporated within the layer of vulcanized silicone rubber 2.

### Method of Production

It should be recognised that the process of selecting a lightfast marker was in no way a trivial matter. A larger number of both organic and inorganic potential pigment chemistries were selected and numerous attempts to incorporate these into a polymeric antifouling composition were made following those methods described in the prior art. Significant problems were however encountered by the inventors on trialling a number of these markers since they did not lend themselves to be blended with the catalyst required for vulcanizing the silicone rubber. Blending the marker with the catalyst is the normal method of production since the catalysts employed are of a lower viscosity than the base silicone rubber compounds, and thus a simple blending process is achieved.

During these trials it was however recognised that bismuth vanadate would serve as an ideal marker since it offered excellent lightfast qualities while exhibiting a yellow colouration that was ideal for use on signs intended to be employed at subsea locations. However, on testing with a bismuth vanadate marker blended with the catalyst for vulcanizing the silicone rubber it was found that the resultant compound was not stable and thus required constant agitation and stirring to keep in phase. This made the vulcanization process of the silicone rubber practically impossible.

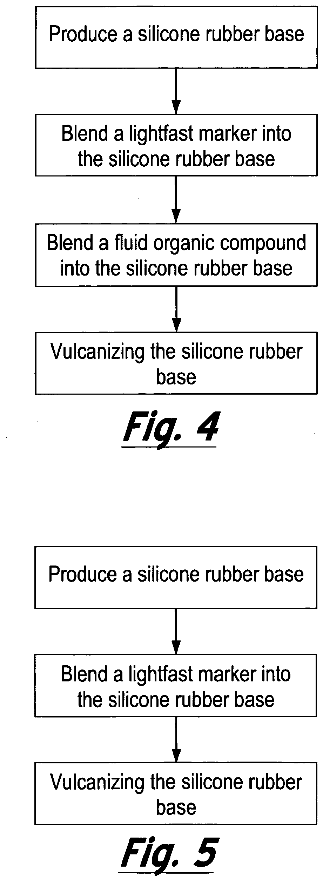

In order to incorporate the bismuth vanadate marker an alternative method of production has been developed, as depicted schematically by the flow charts of Figures 4 employed for the production of the polymeric antifouling composition 1 and Figure 5 employed for the production of polymeric antifouling composition 9. In the first instance a base of high viscosity silicone rubber is produced. An appropriate amount of the bismuth vanadate marker is then blended into silicone rubber base. As a result of the high viscosity of the base material a high shear stirrer is required to be employed so as to increase significantly the applied mixing energy to the base material, when compared to those alternative processes known in the art. The best results have been found to be obtained when the mixing process was carried out by a high-shear propeller comprising saw tooth edges.

The next stage in the production process is only required to produce the polymeric antifouling composition 1 of Figure 1 and so is present in the methodology of Figure 4 but is absent from the methodology of Figure 5. This stage involves the blending of the fluid organic compound into the base material containing the bismuth vanadate marker.

The process of producing the polymeric antifouling compositions 1 and 9 are then completed by vulcanizing the silicone rubber. As detailed in European Patent Publication No. 0 171 110, vulcanization of silicone rubber 2 can be achieved via a number of processes, namely:
1) heat curing the silicone gums with various catalysts (such as peroxides);
2) radiation curing of silicone gums which substantially consist of a polydisubstituted siloxane; and
3) vulcanizing at ambient temperature silicone gums which contain silanol end groups (the so-called RTV gums) in a one-package, or two-package system.

Optionally, a substantially water-impermeable layer 6 can then be attached to the polymeric antifouling composition 1 or 9 by means of the acrylate-type bonding film 7 so as to produce the polymeric antifouling composition 5.

In alternative embodiments, the lightfast marker comprises a marker selected from a group comprising: zinc chromate (ZnCrO₄) known as zinc yellow; nickel antimony titanium yellow (NiO.Sb₂O₅.20TiO₂), known as titanium yellow; cadmium sulphide (CdS), known as cadmium yellow; lead(II) chromate (PbCrO₄), known as chrome yellow; hydrated iron oxide Fe₂O₃ • H₂O, known as yellow ochre; cobalt(II) potassium nitrite, known as cobalt yellow; aryl-azo compounds; mono-azo compounds; di-azo compounds and earth pigments (such as earth yellow).

In a further alternative embodiment, the silicone rubber is vulcanized on a backing sheet. This allows the material to be fixed to a particular object by means of a suitable adhesive which readily bonds with the backing sheet.

### Example

A base mixture was prepared by blending 150 parts by weight of a commercial organo-polysiloxane which contained grafted polymeric segments based on styrene (about 20-25% w/w) and butylacrylate (about 30-40% w/w). A bismuth vanadate marker (15 parts by weight) was then blended into the base mixture as described above. A polyisobutene (30 parts by weight) having an average molecular weight of 350 was then blended into the base mixture. Before heat curing of the base mixture, 6 parts by weight of a catalyst consisting of a blend of an organic tin compound and an alkyl silicate was added.

The mixture thus prepared was attached to a layer of polyvinylchloride by means of 0.4 parts by weight of an acrylate bonding agent and the composition was allowed to cure at room temperature.

### Testing Process

In order to assess the antifouling properties of the above described compositions prolonged testing was carried out.

In the first instance these tests initially take place in a relatively shallow (3 to 5 meters), high fouling environment. An existing prior art composition is also tested simultaneously so as to provide a test control.

On showing significant antifouling results the composition are then subjected to a depth trial (30 meters) on a specially designed rig. Test panels, each containing a number of polymeric antifouling composition of the present invention, and those of the prior art compositions, are deployed. Highly favourable results have been observed.

The above-described polymeric antifouling composition provides a lightfast material that does not fade in colour under external influences such as natural light. As a result articles made from these compositions, such as signs for use in subsea locations, are not susceptible to fading during storage. As a result, the employment of covers for such signs is rendered redundant. This is advantageous because it avoids the danger of signs believed to be anti-fouling inadvertently being susceptible to fouling. In addition it also avoids incurring any unnecessary costs and inconvenience when it is discovered that a cover has not been removed prior to the deployment of a sign.

Due to their non-fade nature the presently described signs exhibit longer working lifetimes than those signs made from prior art compositions. This has obvious practical advantages in that signs made from the polymeric antifouling composition of the present invention require to be replaced less frequently than those signs known in the art.

The foregoing description of the invention has been presented for purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims.
1 Polymeric Antifouling Composition
2 Vulcanized Silicone Rubber
3 Fluid organic Compound
4 Non-fade or light-fast fluorescent pigments
5 Alternative Polymeric Antifouling Composition
6 Water-impermeable Layer
7 Acrylate-type Bonding Film
8 Backing sheet
9 Alternative Polymeric Antifouling Composition

## Claims

1. A subsea sign comprising at least one visual character and a layer of polymeric antifouling composition (1, 5, 9); the polymeric antifouling composition comprising vulcanized silicone rubber (2);
wherein the vulcanized silicone rubber is formed from vulcanization of a high viscosity silicone base comprising one or more lightfast markers (4);
wherein the lightfast marker (4) comprises a marker selected from the group consisting of zinc chromate (ZnCrO₄) known as zinc yellow; nickel antimony titanium yellow (NiO.Sb₂O₅.20TiO₂), known as titanium yellow; cadmium sulphide (CdS), known as cadmium yellow; lead(II) chromate (PbCrO₄), known as chrome yellow; hydrated iron oxide Fe₂O₃ • H₂O, known as yellow ochre; cobalt(II) potassium nitrite, known as cobalt yellow; bismuth vanadate; aryl-azo compounds; mono-azo compounds; and di-azo compounds.

2. The subsea sign as claimed in claim 1 wherein the lightfast marker (4) comprises bismuth vanadate.

3. The subsea sign as claimed in claim 1 or claim 2 wherein the composition further comprises a fluid organic compound (3) which exudes from the layer in use.

4. The subsea sign as claimed in any of the preceding claims further comprising a second layer (6) substantially impermeable to water attached to the layer by an acrylate-type bonding film (7).

5. The subsea sign as claimed in claim 4, wherein the second layer is a polyvinylchloride layer.

6. The subsea sign as claimed in any of the preceding claims further comprising a backing sheet (8) having an irregular surface.

7. A method of producing a subsea sign according to any preceding claim, the method comprising:
forming the polymeric antifouling composition (1, 5, 9) by blending at least one lightfast marker (4) into the high viscosity silicone rubber base; and
forming a layer of the sign by vulcanizing the polymeric antifouling composition
wherein the lightfast marker (4) comprises a marker selected from the group consisting of zinc chromate (ZnCrO₄) known as zinc yellow; nickel antimony titanium yellow (NiO.Sb₂O₅.20TiO₂), known as titanium yellow; cadmium sulphide (CdS), known as cadmium yellow; lead(II) chromate (PbCrO₄), known as chrome yellow;
hydrated iron oxide Fe₂O₃ • H₂O, known as yellow ochre; cobalt(II) potassium nitrite, known as cobalt yellow; bismuth vanadate; aryl-azo compounds; mono-azo compounds; and di-azo compounds.

8. The method as claimed in claim 7 comprising blending the silicone rubber base with a fluid organic compound (3).

9. The method as claimed in claim 7 or claim 8 comprising blending the lightfast marker into the silicone rubber base with a high shear stirrer to increase an applied mixing energy to the silicone rubber base.

10. The method as claimed in claim 9 wherein the high shear stirrer comprises a propeller comprising saw tooth edges.

11. The method as claimed in any of claims 7 to 10 wherein the mixture containing the silicone rubber base blended with the lightfast marker is vulcanized on a backing sheet (8).

12. The method as claimed in any of claims 7 to 11 wherein the step of vulcanizing the mixture comprises heat curing the mixture or radiation curing of the high viscosity silicone rubber base.

13. The method as claimed in any of claims 7 to 12 wherein the step of vulcanizing the mixture comprises a one-package ambient temperature vulcanizing process or a two-package ambient temperature vulcanizing process.

14. The method as claimed in any of claims 7 to 13 wherein the method further comprises the step of attaching a second layer (6) to the vulcanized mixture, wherein the second layer is substantially impermeable to water.

## Patentansprüche

1. Ein Unterwasser-Schild, bestehend aus mindestens einem visuellen Zeichen und einer Schicht einer anwuchsverhindernden Polymerverbindung (1, 5, 9); wobei die anwuchsverhindernde Polymerverbindung vulkanisierten Silikonkautschuk (2) umfasst;
wobei der vulkanisierte Silikonkautschuk aus der Vulkanisation einer hochviskosem Silikon-Basis gebildet wird, die einen oder mehrere lichtechte Marker (4) umfasst; wobei der lichtechte Marker (4) einen Marker umfasst, der aus der Gruppe ausgewählt wurde, die aus folgenden Verbindungen besteht: Zinkchromat (ZnCrO₄), bekannt als Zinkgelb; Nickel-Antimon-Titangelb (NiO.Sb₂O₅.20TiO₂), bekannt als Titangelb; Cadmiumsulfid (CdS), bekannt als Cadmiumgelb; Blei(II)-Chromat (PbCrO₄), bekannt als Chromgelb; Eisenhydroxidoxid Fe₂O₃ • H₂O, bekannt als Ockergelb; Cobalt(II)-Kaliumnitrit, bekannt als Kobaltgelb; Bismutvanadat; Arylazofarbstoffe; Monoazofarbstoffe; und Diazofarbstoffe.

2. Das Unterwasser-Schild nach Anspruch 1, wobei der lichtechte Marker (4) Bismutvanadat umfasst.

3. Das Unterwasser-Schild nach Anspruch 1 und Anspruch 2, wobei die Zusammensetzung außerdem eine flüssige organische Verbindung (3) umfasst, die von der verwendeten Schicht abgegeben wird.

4. Das Unterwasser-Schild nach den vorherigen Ansprüchen, das außerdem eine zweite im Wesentlichen wasserundurchlässigen Schicht (6) umfasst, die durch eine Acrylat-Haftfolie (7) mit der Schicht verbunden ist.

5. Das Unterwasser-Schild nach Anspruch 4, wobei die zweite Schicht eine Polyvinylchlorid-Schicht ist.

6. Das Unterwasser-Schild nach einem der vorherigen Ansprüchen, das außerdem eine Trägerplatte (8) mit einer unregelmäßigen Oberfläche umfasst.

7. Eine Verfahren zur Herstellung eines Unterwasser-Schilds entsprechend einem der vorherigen Ansprüche, wobei das Verfahren Folgendes umfasst:
die Bildung einer anwuchsverhindernden Polymerverbindung (1, 5, 9) durch Mischung von mindestens einem lichtechten Marker (4) mit einer hochviskosen Silikonkautschuk-Basis; und
die Bildung einer Schicht des Schilds durch Vulkanisation der anwuchsverhindernden Polymerverbindung,
wobei der lichtechte Marker (4) einen Marker umfasst, der aus der Gruppe ausgewählt wurde, die aus folgenden Verbindungen besteht: Zinkchromat (ZnCrO₄), bekannt als Zinkgelb; Nickel-Antimon-Titangelb (NiO.Sb₂O₅.20TiO₂), bekannt als Titangelb; Cadmiumsulfid (CdS), bekannt als Cadmiumgelb; Blei(II)-Chromat (PbCrO₄), bekannt als Chromgelb; Eisenhydroxidoxid Fe₂O₃ • H₂O, bekannt als Ockergelb; Cobalt(II)-Kaliumnitrit, bekannt als Kobaltgelb; Bismutvanadat;
Arylazofarbstoffe; Monoazofarbstoffe; und Diazofarbstoffe.

8. Das Verfahren nach Anspruch 7, einschließlich der Mischung der Silikonkautschuk-Basis mit einer flüssigen organischen Verbindung (3).

9. Das Verfahren nach Anspruch 7 oder Anspruch 8, einschließlich der Mischung des lichtechten Markers in der Silikonkautschuk-Basis mit einem High-Shear-Mischer zur Erhöhung der auf die Silikonkautschuk-Basis angewandten Mischenergie.

10. Das Verfahren nach Anspruch 9, wobei der High-Shear-Mischer einen Propeller mit gezahnten Kanten umfasst.

11. Das Verfahren nach einem der Ansprüche 7 bis 10, wobei die Mischung, welche die mit dem lichtechten Marker gemischte Silikonkautschuk-Basis enthält, auf eine Trägerplatte (8) vulkanisiert wird.

12. Das Verfahren nach einem der Ansprüche 7 bis 11, wobei die Vulkanisationsphase der Mischung die Anwendung von Hitze zur Aushärtung der Mischung oder Strahlung zur Aushärtung der hochviskosen Silikonkautschuk-Basis umfasst.

13. Das Verfahren nach einem der Ansprüche 7 bis 12, wobei die Vulkanisationsphase der Mischung einen einphasigen Vulkanisationsprozess bei Umgebungstemperatur oder einen zweiphasigen Vulkanisationsprozess bei Umgebungstemperatur umfasst.

14. Das Verfahren nach einem der Ansprüche 7 bis 13, wobei das Verfahren außerdem die Phase der Aufbringung einer zweiten Schicht (6) auf die vulkanisierte Mischung umfasst, wobei die zweite Schicht im Wesentlichen wasserundurchlässig ist.

## Revendications

1. Un panneau sous-marin comprenant au moins un caractère visuel et une couche de polymère antisalissure (1, 5, 9) ; le polymère antisalissure comprenant du caoutchouc silicone vulcanisé (2) ;
dans lequel le caoutchouc silicone vulcanisé est produit par vulcanisation d'une base silicone très visqueuse comprenant un ou plusieurs marqueurs photorésistants (4) ; dans lequel le marqueur photorésistant (4) comprend un marqueur sélectionné parmi un groupe comprenant du chromate de zinc (ZnCrO₄) appelé jaune zinc ; un composé de nickel antimoine titane (NiO.Sb₂O₅.20TiO₂) appelé jaune titane ; du sulfure de cadmium (CdS) appelé jaune cadmium ; du chromate de plomb (PbCrO₄), appelé jaune chrome ; de l'oxyde de fer hydraté Fe₂O₃ • H₂O, appelé ocre jaune ; du nitrite de cobalt (II) potassium, appelé jaune cobalt ; du vanadate de bismuth, des composés aryl-azo, des composés mono-azo et des composés di-azo.

2. Le panneau sous-marin conforme à la revendication 1 dans lequel le marqueur photorésistant (4) est du vanadate de bismuth.

3. Le panneau sous-marin conforme à la revendication 1 ou à la revendication 2 dans lequel la composition comprend en outre un composé organique fluide (3) qui suinte de la couche en utilisation.

4. Le panneau sous-marin conforme à l'une des revendications précédentes, comprenant en outre une seconde couche (6) fortement imperméable à l'eau, fixée sur la première couche par un film adhésif de type acrylate (7).

5. Le panneau sous-marin conforme à la revendication 4 dans lequel la seconde couche est une couche de chlorure de polyvinyle.

6. Le panneau sous-marin conforme à l'une des revendications précédentes, comprenant en outre une couche de renfort (8) ayant une surface irrégulière.

7. Une méthode de production d'un panneau sous-marin conforme à l'une des revendications précédentes, la méthode consistant à :
former le polymère antisalissure (1, 5, 9) en mélangeant au moins un marqueur photorésistant (4) dans la base de caoutchouc silicone à viscosité élevée ; et
à former une couche du panneau en vulcanisant le polymère antisalissure dans lequel le marqueur photorésistant (4) comprend un marqueur sélectionné parmi un groupe comprenant du chromate de zinc (ZnCrO₄) appelé jaune zinc ; un composé de nickel antimoine titane (NiO.Sb₂O₅.20TiO₂) appelé jaune titane ; du sulfure de cadmium (CdS) appelé jaune cadmium ; du chromate de plomb (PbCrO₄), appelé jaune chrome ; de l'oxyde de fer hydraté Fe₂O₃ • H₂O, appelé ocre jaune ; du nitrite de cobalt (II) potassium, appelé jaune cobalt ; du vanadate de bismuth, des composés aryl-azo, des composés mono-azo et des composés di-azo.

8. La méthode conforme à la revendication 7 consistant à mélanger la base de caoutchouc silicone avec un composé organique fluide (3).

9. La méthode conforme à la revendication 7 ou à la revendication 8 consistant à mélanger le marqueur photorésistant dans la base de caoutchouc silicone à l'aide d'un mélangeur à force de cisaillement importante afin d'augmenter l'énergie de mélange appliquée à la base de caoutchouc silicone.

10. La méthode conforme à la revendication 9 dans laquelle le mélangeur à force de cisaillement importante comprend une hélice dont les bords comprennent des dents de scie.

11. La méthode conforme à l'une des revendications 7 à 10, dans laquelle le mélange contenant la base de caoutchouc silicone mélangée au marqueur photorésistant est vulcanisé sur une plaque de renfort (8).

12. La méthode conforme à l'une des revendications 7 à 11, dans laquelle la phase de vulcanisation du mélange consiste à durcir le mélange par application de chaleur ou de radiations.

13. La méthode conforme à l'une des revendications 7 à 12, dans laquelle la phase de vulcanisation du mélange comprend une opération de vulcanisation à la température ambiante avec un seul composant ou une phase de vulcanisation à la température ambiante avec deux composants.

14. La méthode conforme à l'une des revendications 7 à 13, dans laquelle la méthode comprend en outre la phase consistant à fixer une seconde couche (6) sur le mélange vulcanisé, la seconde couche étant fortement imperméable à l'eau.
